# EUROPEAN PATENT APPLICATION

(11) **EP 2 372 828 A2**
(43) Date of publication of application: **05.10.2011**
(21) Application number: 11159772.0
(22) Date of filing: 25.03.2011
(51) Int. Cl.: H01M 10/50, H01M 2/10

(54) **Thermal isolating apparatus and method for batteries in a telecommunications equipment shelter**

(30) Priority: 01.04.2010 US 753069
(71) Applicant: Purcell Systems, Inc., Spokane Valley, WA 99216 (US)
(72) Inventor: Kale, James, Spokane Valley, WA 99216 (US); Subramanian, Harikrishna, Spokane Valley, WA 99216 (US); Hofman, Jacob, Spokane Valley, WA 99216 (US)
(74) Representative: Viering, Jentschura & Partner

(57) **Abstract**

A preferred thermal control system for a battery stack includes a flexible, thermally insulating, and electrically non-conductive cover supported by a frame to substantially thermally isolate a battery stack from other equipment in a telecommunication shelter. The cover is preferably arranged or cut for placement over existing battery connections so the batteries remain electrically connected to other equipment when the cover is installed on the frame. Cuts in the cover are preferably sealed using an adhesive tape. A heat transfer device is supported by the frame and provides thermal cooling to the battery stack while exhausting heat generated by the batteries from the battery stack enclosure into the interior of the telecommunication shelter. Both the frame and the flexible cover may be adjustable to fit over battery stacks of various sizes.

## Description

### Technical Field

The field of the present disclosure relates to thermally isolating batteries in a telecommunications shelter from other equipment in the shelter.

### Background

Telecommunication shelters, for example, shelters housing cellular telephone equipment, are commonly located on building roofs, in remote locations, or other environments where telecommunication shelters, and the equipment housed therein, are subjected to harsh temperatures. Without air conditioning, the interior of a typical telecommunication shelter can reach temperatures between 150 degrees Fahrenheit (°F) and 195 °F mostly because of heat generated by the equipment in the shelter combined with exposure to sunlight and ambient temperatures In the range of 70 °F to 115 °F.

Telecommunication shelters typically house radio equipment and related ancillary equipment, direct current (DC) power supplies, and battery stacks to provide backup power in the event of loss of DC power. Many telecommunication shelters house equipment, power supplies, and batteries in the same space. Generally, radio equipment, its related ancillary equipment, and DC power supplies can operate in temperatures of up to 105 °F without damage. However, batteries used to supply backup power are commonly damaged by temperatures exceeding 78 °F, usually resulting in reduced battery life or charge holding capacity. Batteries can be expensive to replace because of the purchase price of the batteries and the costs associated with transporting batteries to and from remote or difficult to reach locations. Therefore, air conditioning is commonly provided for telecommunication shelters to maintain the entire internal temperature typically between 74 °F to 78 °F to prevent damaging the batteries due to heat.

Some attempts to provide cooling for batteries include dividing an enclosure into a battery compartment and an electronic component compartment, for example, as described in U.S. Patent Application Pub. No. 2008/0104965 and U.S. Patent Nos. 6,889,752; 6,877,551; 6,704,198; and 5,229,702. Other attempts to provide cooling for batteries include separating batteries into their own shelter, for example, as described in U.S. Patent Application Pub. Nos. 2009/0111010 and 2008/0268333, and U.S. Patent Nos. 5,639,571; 6,294,721; and 6,955,055.

### Summary

The present inventors have recognized various drawbacks associated with proposed attempts to provide cooling for batteries. For example, dividing a shelter into a battery compartment and an electronic component compartment involves physically modifying a shelter or providing a new shelter and can be expensive because of materials, labor, or both. Such division also typically requires disconnecting equipment stored in a shelter during construction or movement to a new shelter, and thus results in the equipment not working for a period of time. Separating batteries into their own shelter commonly requires disconnecting batteries in an existing shelter and moving the batteries into the new shelter outside the original shelter. Electrical connection between the battery shelter and the equipment shelter is then required. Such specific battery shelters may also increase the physical space needed to house the electronic equipment because of the new shelter.

Embodiments of the present invention preferably address one or more drawbacks with currently available battery cooling solutions discussed above, or may address other drawbacks.

One preferred arrangement includes a battery stack enclosure made from a flexible, thermally insulating, and electrically non-conductive cover supported by a frame to substantially thermally isolate a battery stack from other equipment in a telecommunication shelter. The cover is preferably arranged or cut for placement over existing battery connections so the batteries remain electrically connected to other equipment when the cover is installed on the frame. Cuts in the cover may be sealed using an adhesive tape or via fasteners on the cover. A heat transfer device, for example, a thermoelectric cooler, is supported by the frame and provides cooled air to the battery stack while exhausting air warmed by the batteries from the battery stack enclosure into the interior of the telecommunication shelter. Thus, the battery stack may be kept at one temperature while the remainder of the interior of the telecommunication shelter may be kept at a second, higher, or in some cases lower, temperature without modifying the telecommunication shelter. In other embodiments, both the frame and the flexible cover are adjustable to fit over battery stacks of various sizes.

Additional aspects and advantages will be apparent from the following detailed description of preferred embodiments, which proceeds with reference to the accompanying drawings.

### Brief Description of the Drawings

FIG. 1 is a front orthogonal view of a prior art battery stack placement.

FIG. 1A is a sectional view of a block diagram of a prior art telecommunication shelter.

FIG. 2 is a left side orthogonal view of an embodiment of a thermally isolating enclosure illustrating access to a battery stack.

FIG. 3 is a top orthogonal view of a frame on a battery stack according to one embodiment.

FIG. 4 is an assembly view of a thermally isolating enclosure according to another embodiment.

FIG. 5 is a top left orthogonal view of the thermally isolating enclosure of FIG. 4.

FIG. 6 is a top right orthogonal view of the thermally isolating enclosure of FIG. 4.

FIG. 7 is an assembly view of a thermally isolating enclosure according to another embodiment.

FIG. 8 is a top left orthogonal view of the thermally isolating enclosure of FIG. 7.

FIG. 9 is a top right orthogonal view of the thermally isolating enclosure of FIG. 7.

FIG. 10 is a sectional view of another embodiment of a thermally isolating enclosure.

FIG. 11 is a right orthogonal view of another embodiment of a thermally isolating enclosure with a portion of the cover removed to illustrate air flow.

FIG. 12 is a right orthogonal view of another embodiment of a thermally isolating enclosure with a portion of the cover removed to illustrate air flow.

FIG. 13 is a flow chart representing a method for assembling a thermally isolating enclosure.

FIG. 14 is a front view of another embodiment of a thermally isolating enclosure.

### Detailed Description of Preferred Embodiments

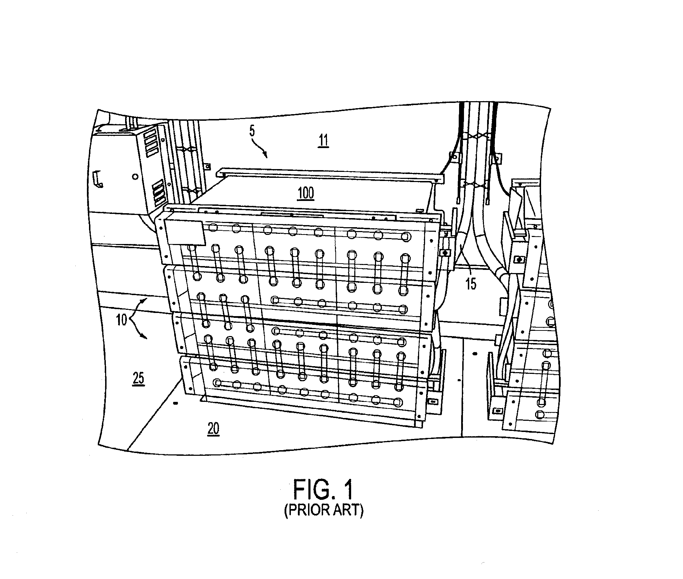

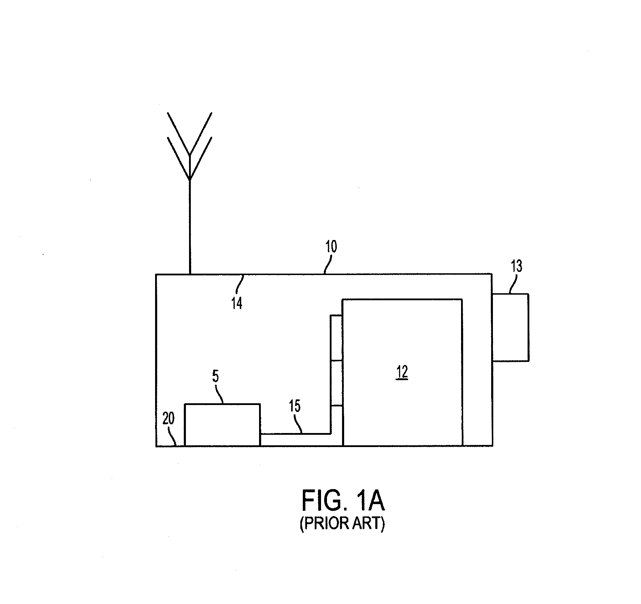

FIG. 1 illustrates a typical configuration for a battery stack 5 for a telecommunication shelter 10. Battery stack 5 is commonly used as a back-up power source for electrical equipment 12 (FIG. 1A) in telecommunication shelter 10 and is electrically connected to such electrical equipment via an electrical conduit, such as a cable 15, wires, or other suitable electrical connector. Battery stack 5 typically rests on a battery support surface 20 which may include a material such as plywood overlying a floor 25 of telecommunication shelter 10, floor 25 itself, or other suitable structure. An air conditioning unit 13 (FIG. 1A) keeps the interior of telecommunication shelter 10 near a predetermined temperature.

Battery stack 5 normally includes a number of batteries 30, which may be stacked in a common battery stack configuration, such as 4 or 8 rows of three batteries 30, or arranged in various other configurations. Common manufacturers of batteries 30 include East Penn Manufacturing Company, Inc. of Lyon Station, Pennsylvania (particularly its Deka brand of batteries), C&D Technologies of Blue Bell, Pennsylvania, Exide Technologies of Milton, Georgia (particularly its GNB brand of batteries), and Enersys of Reading, Pennsylvania. Because the batteries 30 manufactured by different companies have different dimensions even common battery stack configurations may have different dimensions of height, length, or width, singularly or in any combination. A battery stack 5 configured with batteries 30 arranged other than in 4 or 8 rows of three batteries will typically have different dimensions of height, length, or width, singularly or in any combination.

As illustrated in FIG. 1A, typical installations of a battery stack 5 directly expose the battery stack 5 to the inside environment, and thus the ambient temperature, in a telecommunication shelter 10. As discussed above, such placement commonly requires cooling the entire interior of the telecommunication shelter 10 to a temperature, generally at or below 78 °F, optimized for the batteries 30 which are commonly the most temperature sensitive equipment in the telecommunication shelter 10. In cold environments, the interior of telecommunication shelter 10 is commonly maintained at or above 70 °F, again mainly for the benefit of batteries 30.

Embodiments of thermal control systems for a battery stack 5 described herein preferably provide systems that are customizable to fit various battery stack 5 configurations. Preferably, thermal control system embodiments substantially thermally isolate a battery stack 5 from the ambient temperature of the interior of a telecommunication shelter 10. The described embodiments preferably do not require disconnecting battery stack 5 from electrical equipment in a telecommunication shelter 10 when installed. Thus, described, and other, embodiments preferably permit the interior of telecommunication shelter 10 to be maintained at a warmer, or colder, temperature with respect to the temperature at which batteries 30 are maintained. Preferably, maintaining batteries 30 at one temperature and the interior of telecommunication shelter 10 at a separate temperature requires less energy compared to controlling the temperature of the entire interior of telecommunication shelter 10 to suit batteries 30. For example, in a relatively warm environment, the interior of telecommunication shelter 10 may be maintained near 85 °F while the batteries in a thermal control system, such as those discussed below, may be maintained near 78 °F. Even when heat is directed from a thermal control system into the interior of a telecommunication shelter 19, a reduced energy consumption and reduced operating cost for the telecommunication shelter 10 may be realized.

### EXEMPLARY EMBODIMENT

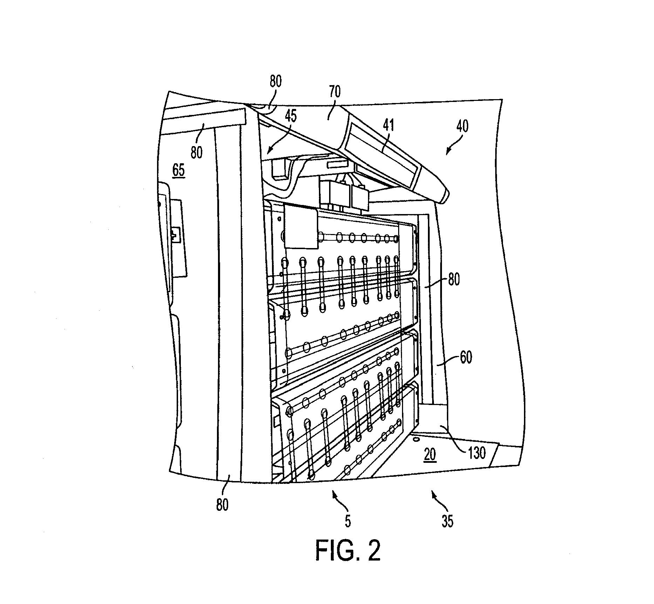

One preferred embodiment is now described with reference to FIGS. 2-6. As illustrated in FIG. 2, a thermal control system 35 (illustrated with a portion of cover 40 in a partially detached position) forms a shelter or thermal barrier around battery stack 5 to substantially thermally isolate a battery space 45 surrounding battery stack 5 from ambient temperatures in the interior of telecommunication shelter 10.

Substantial thermal isolation is generally a level of thermal separation between battery space 45 and an ambient temperature in the telecommunication shelter 10 that permits an interior of telecommunication shelter 10 to be maintained at a shelter temperature while the battery space is maintained at a battery temperature different from the shelter temperature, where the total amount of energy consumed during a unit of time maintaining the shelter and battery temperatures is less than the amount of energy consumed to maintain the interior of the telecommunication shelter 10 at the battery temperature for the same unit of time. A longer unit of time, such as a week or a month, is generally a more meaningful indication of substantial thermal isolation than a relatively short time period.

In some embodiments, thermal isolation is accomplished using a material with an R-value, preferably between approximately 2 ft²·°F·h/Btu (square foot x degree Fahrenheit x hour / British thermal unit) and approximately 4 ft²·°F·h/Btu for cover 40. Preferably, such a material covers approximately 80% of the surface area of a battery space, such as battery space 45. For example, the surface area of a battery space is the surface area of five sides of a hypothetical cube (the top and four sides - thus excluding the bottom) having the same dimensions as a cover, such as cover 40. Thus, heat flow between the battery space 45 and the interior of telecommunication shelter 10 is impeded. One or more vents 50 through cover 40 that permit hydrogen gas generated by battery stack 5 to escape the battery space 45 may be included. Vents 50 may include spaces or gaps between edges of panels, such as top panel 55, first end panel 60, second end panel 65, first side panel 70, and second side panel 75 that form cover 40. Vents 50 may also include spaces between fasteners, such as hook and loop strips 80, sufficient to permit hydrogen gas to pass therethrough. For example, hook and loop strips 80, preferably two strips of 3M™ Dual Lock™ Reclosable Fastener manufactured by 3M of St. Paul, Minnesota, include one strip with a hook structure and the other with a loop structure that permits gasses, such as hydrogen, to pass between two engaged hook and loop strips 80. In alternate embodiments, fasteners may include snaps or hooks that are spaced apart, and vents 50 may include airways between the snaps or hooks.

Alternately, thermal isolation of battery space 45 from the ambient temperature of the interior of telecommunication shelter 10 is accomplished when a total heat flux between the battery space 45 and the interior of the telecommunication shelter 10 is between approximately 6,000 Bfu/ft²·h (British thermal unit / square foot x hour) and approximately 12,500 Btu/ft²·h. Thermally insulating materials, thermally reflective, such as certain plastic or other thin films or foils, and thermally non-reflective materials, such as plastic, fabric, or other suitable materials, or a combination of the foregoing, may be used to form cover 40 to impede heat flux between the battery space 45 and the interior of the telecommunication shelter 10. Other suitable materials and manners may be used for thermally isolating the battery space 45 from the interior of telecommunication shelter 10.

### EXEMPLARY FRAME

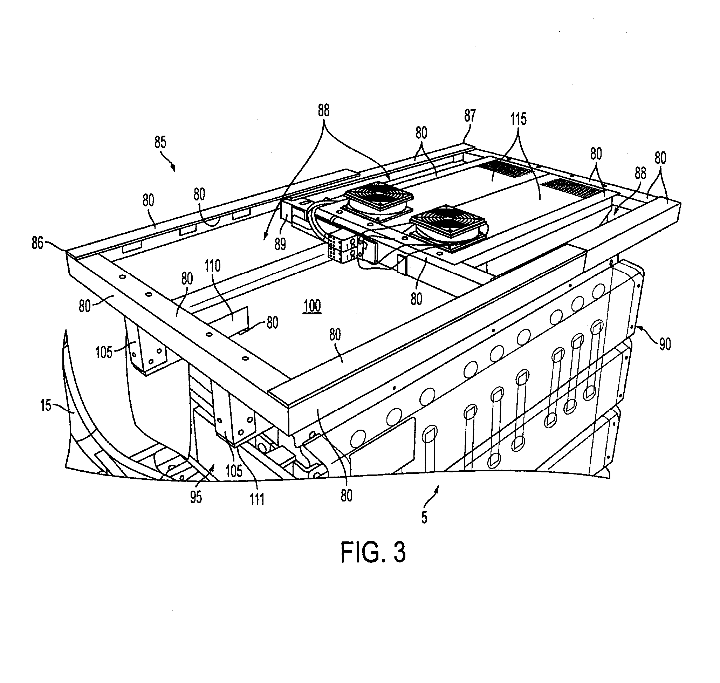

FIG. 3 illustrates a frame 85 mounted on top of battery stack 5. Frame 85 is preferably adjustable to have a variable length. In other words, the length of frame 85 can match a distance between a first end 90 and a second end 95 of a battery stack 5 for battery stacks 5 of various lengths, for example, due to size differences between different brands of batteries. One manner for providing an adjustable frame is to include a first frame portion 86 and a second frame portion 87 that nest together. Fasteners, such as hook and loop strips 80, are preferably included on the first and second frame portions 86 and 87 and are located where first and second frame portions 86 and 87 interface. Fasteners preferably hold the first frame portion 86 together with the second frame portion 87 at various positions with respect to each other. Other suitable arrangements, such as telescoping sections with locking mechanisms, may also be used. Optionally, the width of frame 5 may also be adjustable in a similar manner. Alternately, frame 85 may be fixed, that is, neither the length or width are adjustable. Frame 85 is preferably made from an electrically insulating material, such as high density polyethylene (HDPE), or polyvinyl chloride (PVC).

In FIG. 3, a frame support surface 100 includes the top of battery stack 5. In other embodiments, frame support surface 100 may include floor 25 or battery support surface 20, for example, when frame 85 includes legs 105 that are longer than battery stack 5 is high. Alternately, frame support surface 100 may include the ceiling 14 (FIG. 1A) of telecommunication shelter 10, for example, when frame 85 is suspended, hung, or otherwise supported by the ceiling, or other suitable surface.

The embodiment illustrated in FIG. 3 includes relatively short legs 105 that hold frame 85 above battery stack 5 a sufficient distance, for example, approximately 2 inches to approximately 4 inches, to permit air circulation in battery space 45. Feet 110 are preferably rigidly attached to legs 105, for example, by rivets, screws, welds, or other suitable fastener, and preferably include a fastener, such as hook and loop strips 80, on an underside 111 of feet 110. Hook and loop strips 80 located on frame support surface 100 are preferably positioned to engage hook and loop strips 80 on the underside 111 of feet 110 to releasably secure frame 85 over battery stack 5. Alternately, frame 85 may be releasably secured over Battery stack 5 by resting on support surface 100. Legs 105 and feet 110 are preferably made from an electrically insulating material, such as high density polyethylene (HDPE), or polyvinyl chloride (PVC).

### EXEMPLARY HEAT TRANSFER DEVICE

One or more heat transfer devices, such as thermoelectric coolers 115, are preferably supported by frame 85. The number, type, and size of heat transfer devices used is preferably selected based on the expected thermal load and cooling requirements for a battery stack 5. Typically, the surface area of heat transfer devices used will be less than the open area of frame 85, thus leaving a gap 88 between heat transfer devices and frame 85. Preferably, heat transfer devices are positioned near the first end 90 or the second end 95 of battery stack and configured to blow cool air Into battery space 45 as described in further detail below. Alternately, heat transfer devices may transfer heat via conduction, radiation, or convection, singularly or in any combination. Another exemplary heat transfer device includes a refrigerant loop, where the cold portion of the loop is In the battery space 45 and the hot portion of the loop is exposed to the environment inside telecommunication shelter 10.

### EXEMPLARY COVER

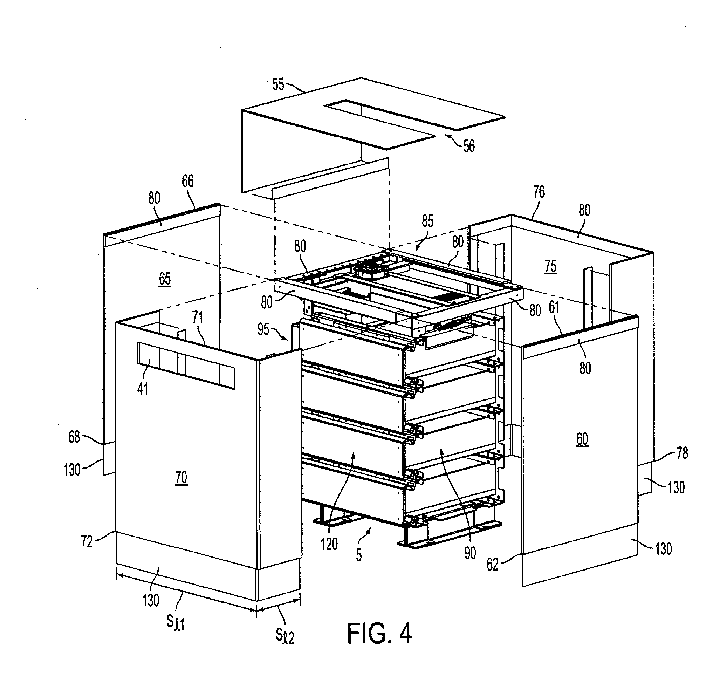

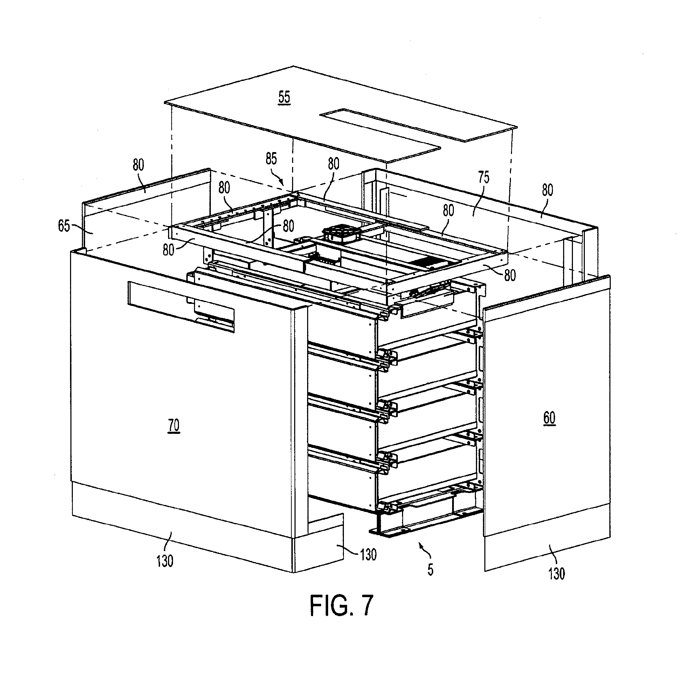

A preferred cover 40 is illustrated in FIGS. 4-9. Cover 40 is formed from five panels, top panel 55, first end panel 60, second end panel 65, first side panel 70, and second side panel 75. Some alternate embodiments use fewer panels to form cover 40 while other alternate embodiments use more panels to form cover 40. Top panel 55, first end panel 60, second end panel 65, first side panel 70, and second side panel 75 are preferably made from a flexible, thermally insulating, and electrically non-conducting material such as a combination of PVC, fiberglass & insulating material, or other suitable material. Alternate materials, such as thermally reflective materials, may be used in other embodiments.

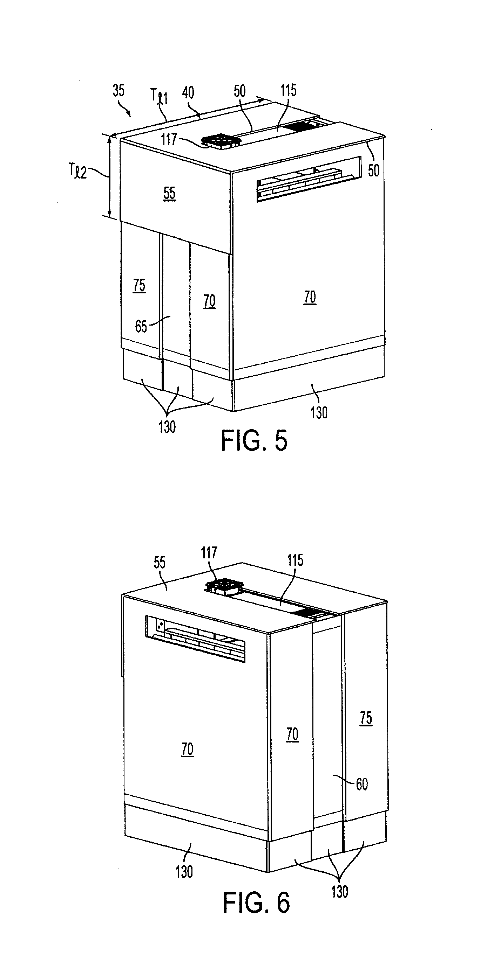

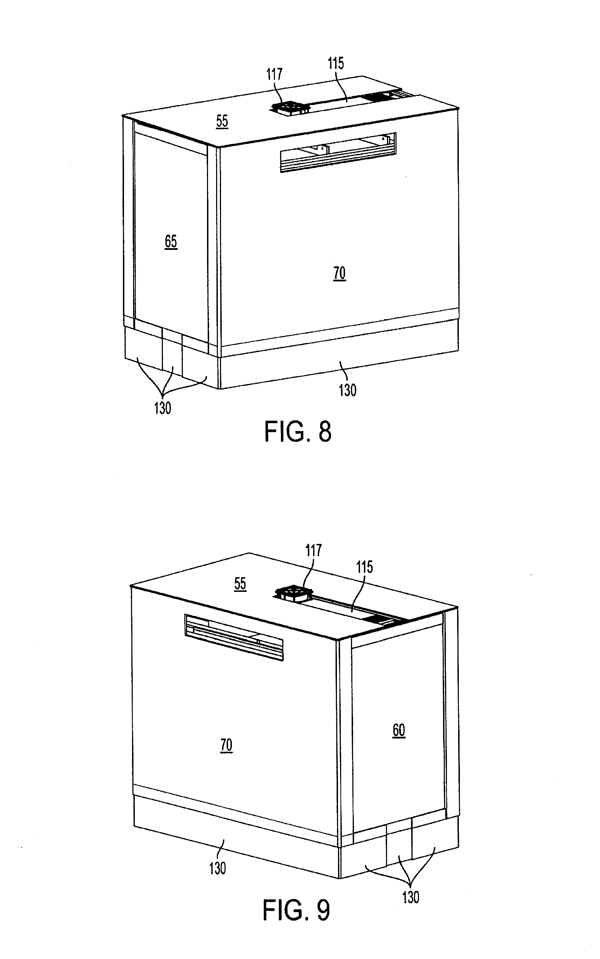

Top panel 55 includes an opening 56 that accommodates thermoelectric cooler 115, or other suitable heat transfer devices, while substantially covering gap 88 between thermoelectric cooler 115 and frame 85. A fastener on frame 85 includes one or more hook and loop strips 80 adhered to frame 85, thermoelectric cooler 115, or both. A fastener on one side of top panel 55 includes one or more hook and loop strips 80 adhered to top panel 55, where the hook and loop strips 80 on top panel 55 and the hook and loop strips 80 on frame 85 are matched for releasable engagement with each other. Alternately, top panel 55 may releasably engage frame 85 by resting on frame 85, and may have a shape, stiffness, or other suitable structural configuration to facilitate retaining top panel 55 on frame 85. Top panel 55 has a length T_{L} (equal to T_{ℓ1} + T_{ℓ2}, Fig. 5) sufficient to substantially cover gap 88 when frame 85 is in a fully extended position (FIG. 8). When frame 85 is not in a fully extended position, top panel 55 folds and overlaps portions of second end panel 65 and first and second side panels 70 and 75.

First and second end panels 60 and 65 include a connector strip 80 on one side near an end 61 and 66, respectively, and an additional connector strip 80 on the opposite side also near ends 61 and 66, respectively. The hook and loop strips 80 on one side of first and second end panels 60 and 65 are matched to hook and loop strips 80 on frame 85 for releasable engagement with each other. First and second end panels 60 and 65 thus hang from frame 85 and extend substantially the length of battery stack 5 to substantially cover the first and second ends 90 and 95, respectively, of battery stack 5. Alternately, first and second end panels 60 and 65 may releasably engage frame 85 by resting or hanging on frame 85, and may have a shape, stiffness, or other suitable structural configuration to facilitate retaining first and second end panels 60 and 65 on frame 85.

First and second side panels 70 and 75 include a connector strip 80 on one side near an end 71 and 76, respectively. The hook and loop strips 80 on one side of first and second side panels 70 and 75 are matched to hook and loop strips 80 on frame 85 for releasable engagement with each other. First and second side panels 70 and 75 thus hang from frame 85 and extend substantially the length of battery stack 5 to substantially cover the first and second sides 120 and 125, respectively, of battery stack 5. Alternately, first and second side panels 70 and 75 may releasably engage frame 85 by resting or hanging on frame 85, and may have a shape, stiffness, or other suitable structural configuration to facilitate retaining first and second side panels 70 and 75 on frame 85.

First and second side panels 70 and 75 each have a length S_{L} (equal to S_{ℓ1} + 2S_{ℓ2}, Fig. 5) sufficient to cover first side 120 and second side 125 when frame 85 is in a fully extended position (FIG. 8). When frame 85 is not in a fully extended position, first and second side panels 70 and 75 each overlap portions of first and second end panels 60 and 65. Portions of first and second side panels 70 and 75 that overlap first and second end panels 60 and 65 releasably attach to first and second end panels 60 and 65 by engaging the hook and loop strips 80 on one side of first and second side panels 70 and 75 with the additional hook and loop strips 80 on first and second end panels 60 and 65.

Cover 40 preferably includes a window 41. Window 41 may be located at any place on cover 40, but is preferably located to permit viewing of electronics, indicators, or other equipment associated the a thermal control system.

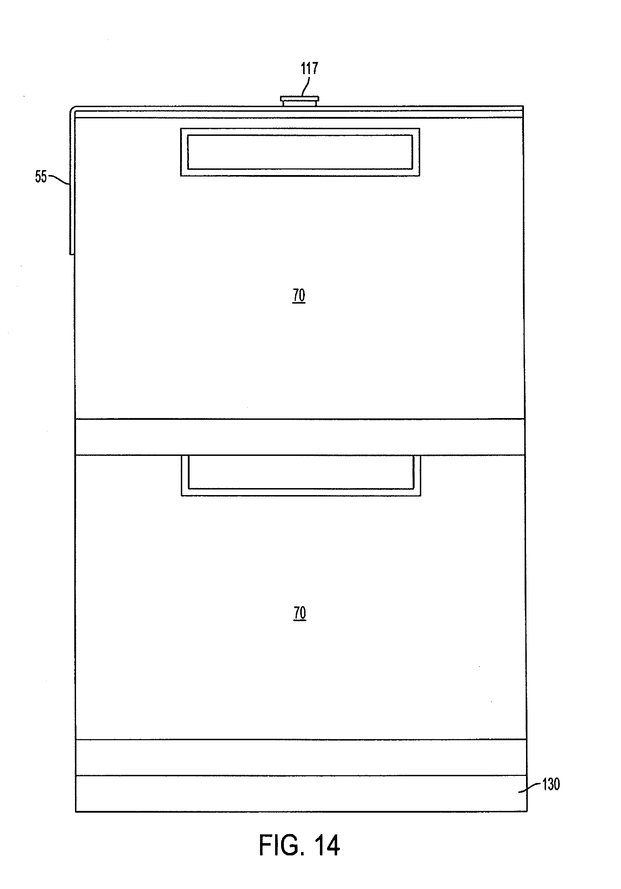

First and second end panels 60 and 65 and first and second side panels 70 and 75 each preferably include additional hook and loop strips 80 located distally, or away, from the hook and loop strips 80 that are proximate, or near, ends 61, 66, 71, and 76. For some battery stack 5 configurations, for example when battery stack 5 includes 4 rows of three batteries 30, skirt portions 130 may be releasably attached to ends 62, 68, 72, and 78 via hook and loop strips 80 to substantially close any gap existing between ends 62, 68, 72, and 78 and battery support surface 20 (FIG. 2). Skirt portions 130 are preferably made from a flexible, thermally insulating, and electrically non-conducting material such as 1/16 inch thick neoprene, for example. For other battery stack 5 configurations, for example, when battery stack 5 includes 8 rows of three batteries 30, a second set of first and second end panels 60 and 65 and first and second side panels 70 and 75 may be releasably attached to ends 62, 68, 72, and 78 via hook and loop strips 80 (see FIG. 14, for example). Skirt portions 130 may be releasably attached to the second set of first and second end panels 60 and 65 and first and second side panels 70 and 75 proximate battery support surface 20 via hook and loop strips 80.

First and second end panels 60 and 65 and first and second side panels 70 and 75 preferably do not touch, or substantially do not touch, battery stack 5. Preferably, first and second end panels 60 and 65 and first and second side panels 70 and 75 are spaced apart from battery stack 5 to facilitate air flowing through and around battery stack 5. For example, first and second end panels 60 and 65 are preferably positioned approximately 2 inches to approximately 4 inches from first and second ends 90 and 95 of battery stack 5. First and second side panels 70 and 75 are preferably positioned approximately 2 inches to approximately 4 inches from first and second sides 120 and 125 of battery stack 5.

### EXEMPLARY AIR FLOW CONFIGURATION

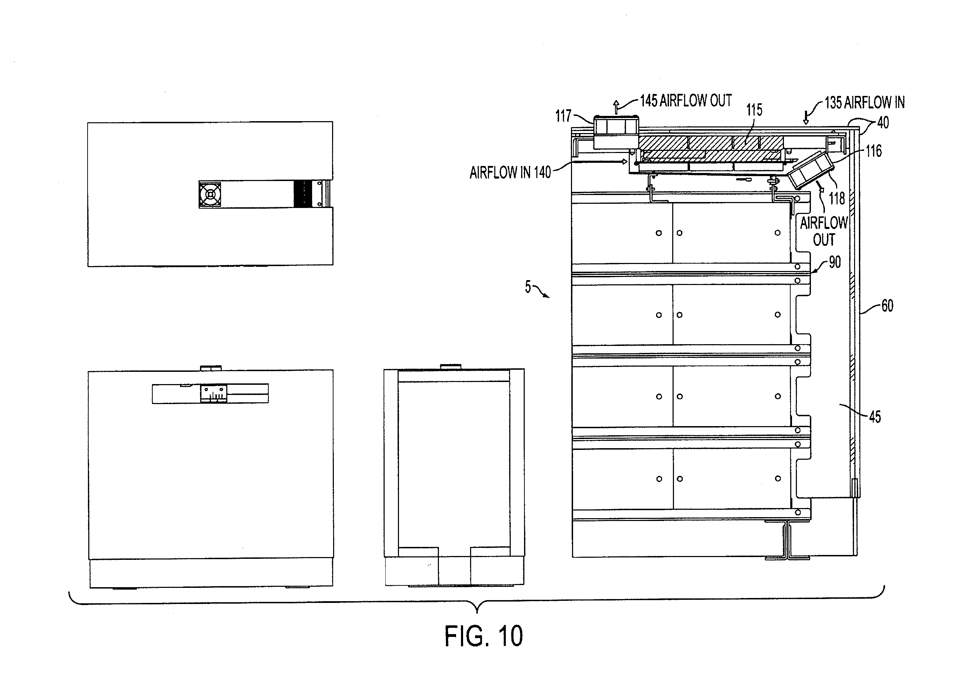

FIG. 10 illustrates a sectional view showing a preferred position and configuration for a heat transfer device, such as a thermoelectric cooler 115. Thermoelectric cooler 115 is preferably located proximate either a first or second end 90 or 95 of battery stack 5. In FIG. 10, thermoelectric cooler 115 is located proximate first end 90. A first fan 116 is located proximate first end 90, and preferably at least partially hangs over, or extends past, the first end 90. A second fan 117 is located distal from first end 90. First fan 116 is positioned and configured to (1) blow interior air 135 from the interior of shelter 10 into battery space 45 and (2) re-circulate battery space air 140 within battery space 45. Second fan 117 is positioned and configured to blow exhaust air 145, including air warmed by batteries 30, from battery space 45 to the interior of shelter 10.

Interior air 135 and battery space air 140 moved by first fan 116 are preferably cooled by passing over the cold side of thermoelectric devices, such as Peltier devices, before being blown through the outlet 118 of first fan 116 and against first end panel 60. Interior air 135 and battery space air 140 could be heated by reversing the current direction through the thermoelectric devices should hot air, instead of cold air, be needed. Outlet 118 is preferably located approximately 1 inch to approximately 4 inches from a side, such as end panel 60, of cover 40.

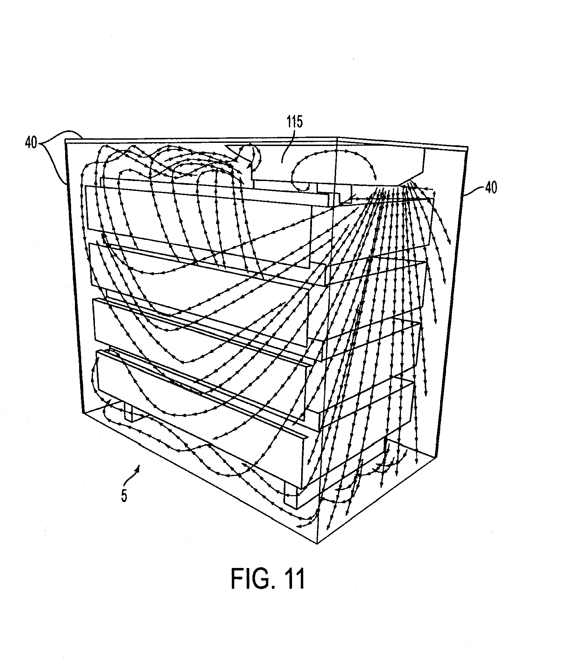

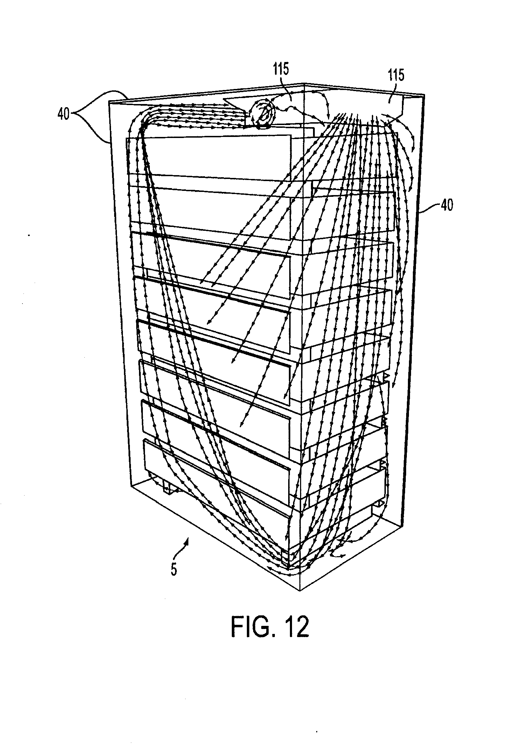

First fan 116 is preferably mounted at an angle to direct air issuing from outlet 118 to impact first end panel 60 at an angle between approximately 28° and approximately 30°, and preferably approximately 29°. Preferably, cooled air impacting first end panel 60 at an angle between approximately 28° and approximately 30° flows along first end panel 60 as well as substantially through and around battery stack 5, for example, as illustrated in FIGS. 11 and 12. Directing cooled air to impact first end panel 60 at an angle between approximately 28° and approximately 30° preferably provides sufficient air flow through and around battery stack 5 to cool batteries 30 without including baffles or other structures for guiding air flow as part of cover 40 or within battery space 45.

In other embodiments the angle of impact of cooled air on a cover, such as cover 40, cooperates with the distance or distances that the cover is located with respect to a battery stack, such as battery stack 5, to facilitate air flow through and around the battery stack. In a preferred arrangement, cooled air impacts a cover at an angle of approximately 29°, a top of the cover is located approximately 4 inches to approximately 6.0 inches above the top of a battery stack, and sides and ends of the cover are positioned approximately 2 inches to approximately 4 inches from respective sides and ends of the battery stack.

In alternate embodiments, air flow may not be necessary to carry out heat transfer from the battery space 45 to the environment inside a shelter 10. For example, a cold side of a thermoelectric device could contact cover 40 and cool cover 40, which in turn cools battery space 45.

### EXEMPLARY INSTALLATION TECHNIQUE

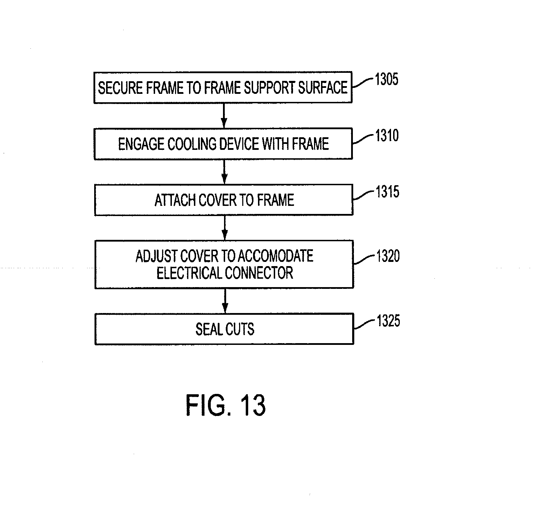

A preferred method for assembling a thermal control system, such as thermal control system 35, is illustrated in FIG. 13. Referring also to FIGS. 1, 3, and 4, at step 1305 a frame 85 is releasably secured to frame support surface 100. At step 1310, thermoelectric cooler 115 engages frame 85 and is supported by frame 85. For example, opposing ends of thermoelectric cooler 115 rest on or are attached to first frame portion 86 and support bar 89 (FIG. 4). Attachment may occur via hook and loop strips 80, rivets, screws, adhesives, or other suitable manner.

As evident from FIG. 1, cable 15 approaches and is connected to battery stack 5 along second side 125, proximate the second end 95 of battery stack 5 and proximate shelter wall 11. At step 1315, cover 40 is attached to the frame 85. For example, first and second end panels 60 and 65 may be releasably attached to frame 85, for example using hook and loop strips 80, snaps, hooks and eyes, or other suitable fastener, without interference from cable 15. Alternately, first and second panels 60 and 65 may be configured to drape or rest on frame 85 as a means of releasable attachment. First side panel 70 may be releasably attached to frame 85 and to portions of first and second end panels 60 and 65, again without interference from cable 15. And, second side panel 75 may be releasably attached to portions of frame 85 and first end panel 60 without interference from cable 15.

At step 1320, cover 40 is adjusted, arranged, or modified to accommodate cable 15. For example, because cable 15 approaches and is connected to battery stack 5 proximate the second end 95 of battery stack 5 and proximate shelter wall 11 in FIG. 1, attaching second side panel 75 to the remaining portion of frame 85 and to second end panel 65 may require working around cable 15. If possible, edges of second side panel 75 may be arranged around cable 15 so that cable 15 enters battery space 45 between second side panel 75 and second end panel 65. However, if needed, second side panel 75, second end panel 65, or both, may be cut to permit cable 15 to pass therethrough without disconnecting cable 15 from battery stack 5. Any cuts that are made are preferably sealed with adhesive tape at step 1325. Thus, regardless of how cable 15 approaches and is connected to battery stack 5, including from the top, appropriate portions of cover 40 may be arranged, cut, or both, to assemble cover 40 without disconnecting cable 15 from battery stack 5.

As an extension of step 1315, for example, when cover 40 includes multiple panels, top panel 55 is releasably attached to frame 85 to substantially cover gap 88. If needed, top panel 55 is folded over portions of second end panel 65 and first and second side panels 70 and 75, and optionally may be attached to one or more of second end panel 65 and first and second side panels 70 and 75.

### ALTERNATE COVER ARRANGEMENTS

While preferred embodiments have been described, various modifications, substitutions, or both, can be made. For example, one or more of top panel 55, first end panel 60, second end panel 65, first side panel 70, and second side panel 75 could be sewn together or otherwise suitably attached, or one or more flexible panels could replace first end panel 60, second end panel 65, first side panel 70, and second side panel 75, singularly or in any combination. Alternately, any or all of top panel 55, first end panel 60, second end panel 65, first side panel 70, and second side panel 75 could be made from a rigid, or relatively rigid, thermally insulating, and electrically non-conductive material and could be sized for specific battery stack 5 configurations. Like flexible top panel 55, first end panel 60, second end panel 65, first side panel 70, and second side panel 75, one or more of rigid or relatively rigid top panel 55, first end panel 60, second end panel 65, first side panel 70, and second side panel 75 could be attached together or integrally formed together.

It will be obvious to those having skill in the art that many other changes may be made to the details of the above-described embodiments without departing from the underlying principles of the invention. The scope of the present invention should, therefore, be determined only by the following claims.

Preferably, in a thermal control system for a battery stack in a telecommunication shelter, the system can comprise a frame supported by a frame support surface; a cover sized to substantially overlie the battery stack, wherein at least a portion of the cover is configured to releasably engage the frame to form a battery space surrounding the battery stack, wherein the cover is made from a thermally insulating and electrically non-conducting material to substantially thermally isolate the battery space from an ambient temperature in the telecommunication shelter, and wherein the cover includes a vent through which hydrogen gas generated by the battery stack escapes the battery space; and a heat transfer device supported by the frame, wherein the heat transfer device is configured to reduce the temperature in at least a portion of the battery space and to transfer at least a portion of the heat in the battery space from the battery space to an interior of the telecommunication shelter.

Preferably, in a thermal control system wherein the heat transfer device is configured to (a) provide cooled air to the battery space, and (b) exhaust warmed air from the battery space directly to an interior of the telecommunication electronics shelter.

Preferably, in a thermal control system wherein the frame can include a first frame end and a second frame end and the first frame end is moveable relative to the second frame end to vary the distance between the first frame end and the second frame end; the heat transfer device can include a cool air outlet positioned proximate a first end of the frame and proximate a top of the battery stack; and the cool air outlet is configured to direct cooled air at an interior side of the cover at an angle between approximately 28 degrees and approximately 30 degrees to direct cooled air substantially through and around the battery stack.

Preferably, in a thermal control system wherein a distance between the cool air outlet and the interior side of the cover is in the range of 2.0 inches to 4.0 inches.

Preferably, in a thermal control system wherein the battery stack includes a first end, an opposing second end, and first and second sides between the first and second ends; and a distance between the cover and the battery stack first end, second end, first side, and second side is in the range of 2.0 inches to 4.0 inches.

Preferably, in a thermal control system can further comprise a plurality of fasteners attached to the frame; wherein the cover can further comprise (a) a flexible top panel including a first frame fastener, wherein the flexible top panel is configured for releasable attachment to the frame via the first frame fastener, and wherein the flexible top panel is configured to substantially cover a gap between the heat transfer device and the frame, and (b) a first flexible side panel including a second frame fastener, wherein the first flexible side panel is configured for releasable attachment to the frame via the second frame fastener, and wherein the first flexible side panel is configured to extend from the frame towards a battery support surface to substantially cover a first end, a first side, a second end, and a second side of a battery stack.

Preferably, in a thermal control system wherein the frame includes a first frame end and a second frame end and the first frame end is moveable relative to the second frame end to vary the distance between the first frame end and the second frame end; and the first frame fastener is sized and positioned on the underside of the flexible top panel to engage one or more fasteners attached to (a) the frame first end and (b) the frame second end regardless of the distance between the first frame end and the second frame end.

Preferably, in a thermal control system can further comprise a cover fastener attached to the first flexible side panel wherein the first flexible side panel has a length sufficient to circumscribe the frame when the first and second frame ends are at a farthest distance from each other; and wherein the cover fastener is configured to releasably engage the second frame fastener when a first end of the first flexible side panel overlaps a second end of the first flexible side panel.

Preferably, in a thermal control system can further comprise a cover fastener attached to the first flexible side panel, wherein the cover fastener is distal from the second frame fastener; and wherein the cover can further comprise a second flexible side panel including a third frame fastener; wherein the third frame fastener is configured to releasably engage the cover fastener attached to the first flexible side panel; and wherein the releasably engaged first flexible side panel and second flexible side panel are configured to extend from the frame towards the battery support surface to substantially cover a first end, a first side, a second end, and a second side of a battery stack.

Preferably, in a thermal control system can further comprise a cover fastener attached to the first flexible side panel, wherein the cover fastener is distal from the second frame fastener; a skirt including a skirt fastener; and wherein the skirt fastener is configured to releasably engage the cover fastener and the skirt is configured to contact the battery stack support surface to substantially close a gap between the first flexible side panel and the battery stack support surface.

Preferably, in a thermal control system wherein the frame support surface includes a top surface of the battery stack and can further comprise a plurality of feet attached to the frame, wherein the plurality of feet are configured to support the frame above the battery stack; a foot fastener attached to an underside of each of the plurality of feet; one or more support fasteners configured for attachment to a top of the battery stack; and wherein the frame is configured for releasable attachment to the battery stack via the foot fasteners engaging the one or more support fasteners when the one or more support fasteners are attached to the top of the battery stack.

Preferably, in a thermal control system can further comprise a cool air outlet of the heat transfer device configured for positioning proximate the first end of the frame and proximate a top of the battery stack; and wherein the cool air outlet is configured to direct cooled air at the first side panel at an angle between approximately 28 degrees and approximately 30 degrees to direct cooled air substantially through and around the battery stack.

Preferably, in a thermal control system wherein the heat transfer device includes a thermoelectric device.

Preferably, in a thermal control system can further comprise a window formed in the cover.

Preferably, in a thermal control system for a battery stack in a telecommunication shelter can comprise a frame; cover means supported by the frame for creating a thermally isolating enclosure around the battery stack to substantially thermally isolate the battery stack from an ambient temperature in an interior of the telecommunication shelter; fastening means for releasably attaching the cover means to the frame means; and cooling means supported by the frame for cooling an interior of the enclosure formed by the flexible cover means and for directing heat from the enclosure formed by the flexible cover means to an interior environment of a telecommunication shelter.

Preferably, in a method for assembling a thermal control system about a battery stack can comprise adjusting a frame to substantially match a perimeter of a battery stack; positioning the frame above the battery stack and releasably attaching the frame to a support surface; attaching a cover to the frame to form a battery space surrounding the battery stack, wherein the cover is made from a thermally insulating and electrically non-conducting material, and wherein the cover includes a vent through which hydrogen gas generated by the battery stack escapes the battery space; and attaching a heat transfer device to the frame, wherein the heat transfer device is configured to reduce the temperature in at least a portion of the battery space and to transfer at least a portion of the heat in the battery space from the battery space to an interior of the telecommunication shelter.

Preferably, in a method wherein attaching a cover to the frame includes releasably attaching a flexible top panel to the frame; and releasably attaching a first flexible side panel to the frame, wherein the first flexible side panel extends away from the frame towards a battery support surface to substantially cover a first end, a first side, a second end, and a second side of the battery stack.

Preferably, in a method which can further comprise creating an opening in the cover, passing an electrical carrier through the opening, and sealing at least a portion of the opening.

Preferably, in a method wherein attaching a cover to the frame can further include releasably attaching a flexible top panel to the frame, releasably attaching a first flexible side panel to the frame, releasably attaching a second flexible side panel to the frame, releasably attaching a third flexible side panel to the frame, and releasably attaching a fourth flexible side panel to the frame.

Preferably, in a method which can further comprise releasably attaching a skirt to (a) the first flexible side panel, (b) the second flexible side panel, (c) the third flexible side panel, and (d) the fourth flexible side panel.

Preferably, in a method which can further comprise passing an electrical carrier between any two of the first flexible side panel, the second flexible side panel, the third flexible side panel, the fourth flexible side panel, and the flexible top panel.

Preferably, in a method which can further comprise creating an opening in any one of the first flexible side panel, the second flexible side panel, the third flexible side panel, the fourth flexible side panel, and the flexible top panel; passing an electrical carrier through the opening; and sealing at least a portion of the opening with an adhesive tape.

## Claims

1. A thermal control system for a battery stack in a telecommunication shelter, the system comprising:
a frame having a first frame end and a second frame end, wherein the frame is supported by a frame support surface;
a cover sized to substantially overlie the battery stack, wherein at least a portion of the cover is configured to releasably engage the frame to form a battery space surrounding the battery stack, wherein the cover is made from a thermally insulating and electrically non-conducting material to substantially thermally isolate the battery space from an ambient temperature in the telecommunication shelter, and wherein the cover includes a vent through which hydrogen gas generated by the battery stack escapes the battery space; and
a heat transfer device supported by the frame, wherein the heat transfer device is configured to reduce the temperature in at least a portion of the battery space and to transfer at least a portion of the heat in the battery space from the battery space to an interior of the telecommunication shelter.

2. A thermal control system according to claim 1, wherein the heat transfer device is configured to (a) provide cooled air to the battery space, and (b) exhaust warmed air from the battery space directly to an interior of the telecommunication electronics shelter.

3. A thermal control system according to claim 1, wherein:
the cover further comprises (a) a flexible top panel including a first frame fastener, wherein the flexible top panel is configured for releasable attachment to the frame via the first frame fastener, and wherein the flexible top panel is configured to substantially cover a gap between the heat transfer device and the frame, and (b) a first flexible side panel including a second frame fastener, wherein the first flexible side panel is configured for releasable attachment to the frame via the second frame fastener, and wherein the first flexible side panel is configured to extend from the frame towards a battery support surface to substantially cover a first end, a first side, a second end, and a second side of a battery stack.

4. A thermal control system according to claim 1 or 3, further comprising:
a plurality of fasteners attached to the frame;
wherein the first frame end is moveable relative to the second frame end to vary the distance between the first frame end and the second frame end; and
wherein the first frame fastener is sized and positioned on the underside of the flexible top panel to engage one or more fasteners attached to (a) the frame first end and (b) the frame second end regardless of the distance between the first frame end and the second frame end.

5. A thermal control system according to claim 4, further comprising a cover fastener attached to the first flexible side panel:
wherein the first flexible side panel has a length sufficient to circumscribe the frame when the first and second frame ends are at a farthest distance from each other; and
wherein the cover fastener is configured to releasably engage the second frame fastener when a first end of the first flexible side panel overlaps a second end of the first flexible side panel.

6. A thermal control system according to claim 3, further comprising:
a cover fastener attached to the first flexible side panel, wherein the cover fastener is distal from the second frame fastener; and
wherein the cover further comprises a second flexible side panel including a third frame fastener;
wherein the third frame fastener is configured to releasably engage the cover fastener attached to the first flexible side panel; and
wherein the releasably engaged first flexible side panel and second flexible side panel are configured to extend from the frame towards the battery support surface to substantially cover a first end, a first side, a second end, and a second side of a battery stack.

7. A thermal control system according to claim 3, further comprising:
a cover fastener attached to the first flexible side panel, wherein the cover fastener is distal from the second frame fastener;
a skirt including a skirt fastener; and
wherein the skirt fastener is configured to releasably engage the cover fastener and the skirt is configured to contact the battery stack support surface to substantially close a gap between the first flexible side panel and the battery stack support surface.

8. A thermal control system according to claim 1 or 3, wherein the frame support surface includes a top surface of the battery stack and further comprising:
a plurality of feet attached to the frame, wherein the plurality of feet are configured to support the frame above the battery stack;
a foot fastener attached to an underside of each of the plurality of feet;
one or more support fasteners configured for attachment to a top of the battery stack; and
wherein the frame is configured for releasable attachment to the battery stack via the foot fasteners engaging the one or more support fasteners when the one or more support fasteners are attached to the top of the battery stack.

9. A thermal control system according to claim 1 or 3, further comprising:
a cool air outlet of the heat transfer device configured for positioning proximate the first end of the frame and proximate a top of the battery stack; and
wherein the cool air outlet is configured to direct cooled air at the first side panel at an angle between approximately 28 degrees and approximately 30 degrees to direct cooled air substantially through and around the battery stack.

10. A thermal control system according to claim 9, wherein a distance between the cool air outlet and the interior side of the cover is in the range of 2.0 inches to 4.0 inches.

11. A thermal control system according to claim 10, wherein:
the battery stack includes a first end, an opposing second end, and first and second sides between the first and second ends; and
a distance between the cover and the battery stack first end, second end, first side, and second side is in the range of 2.0 inches to 4.0 inches.

12. A method for assembling a thermal control system about a battery stack located in a telecommunication shelter comprising:
adjusting a frame to substantially match a perimeter of a battery stack;
positioning the frame above the battery stack and releasably attaching the frame to a support surface;
attaching a cover to the frame to form a battery space surrounding the battery stack, wherein the cover is made from a thermally insulating and electrically non-conducting material, and wherein the cover includes a vent through which hydrogen gas generated by the battery stack escapes the battery space; and
attaching a heat transfer device to the frame, wherein the heat transfer device is configured to reduce the temperature in at least a portion of the battery space and to transfer at least a portion of the heat in the battery space from the battery space to an interior of the telecommunication shelter.

13. A method according to claim 12, wherein attaching a cover to the frame includes:
releasably attaching a flexible top panel to the frame; and
releasably attaching a first flexible side panel to the frame, wherein the first flexible side panel extends away from the frame towards a battery support surface to substantially cover a first end, a first side, a second end, and a second side of the battery stack.

14. A method according to claim 12 or 13 further comprising:
creating an opening in the cover;
passing an electrical carrier through the opening; and
sealing at least a portion of the opening.

15. A method according to claim 12, wherein attaching a cover to the frame further includes:
releasably attaching a flexible top panel to the frame;
releasably attaching a first flexible side panel to the frame;
releasably attaching a second flexible side panel to the frame;
releasably attaching a third flexible side panel to the frame; and
releasably attaching a fourth flexible side panel to the frame.

16. A method according to claim 12 or 15 further comprising releasably attaching a skirt to the cover.
